# EUROPEAN PATENT SPECIFICATION

(11) **EP 2 082 276 B1**
(45) Date of publication and mention of the grant of the patent: **04.01.2017**
(21) Application number: 06808460.7
(22) Date of filing: 07.11.2006
(51) Int. Cl.: G02B 6/44

(54) **OPTICAL FIBRE UNIT BLOWING INSTALLATION**
GLASINSTALLATIONEN FÜR OPTISCHE FASEREINHEITEN
INSTALLATION DE SOUFFLAGE D'UNITÉ DE FIBRE OPTIQUE

(43) Date of publication of application: 29.07.2009
(73) Proprietor: Prysmian Cables & Systems Limited, Eastleigh Hampshire SO50 6YU (GB)
(72) Inventor: GRIFFITHS, Ian, Eastleigh Hampshire SO50 6YU (GB); HUBBARD, Paul, Eastleigh Hampshire SO50 6YU (GB)
(74) Representative: Whitlock, Holly Elizabeth Ann
(86) International application number: PCT/GB2006/004165
(87) International publication number: WO 2008/056091

(56) References cited:
- EP-A2- 0 187 502
- EP-A2- 0 350 245
- WO-A-92/20000
- DE-A1- 4 406 154
- FR-A1- 2 337 451
- US-A- 5 471 555
- US-A- 5 610 370
- US-B1- 6 176 022

## Description

### Field of the Invention.

The present invention relates to an installation for a blown optical fibre unit.

In particular, the present invention relates to a gas block housing for being used in a blowing installation of an optical fibre unit.

More in particular, the present invention relates to a method of installing an optical fibre unit.

### Background to the Invention.

Developments in fibre optical cable installations have seen a move from traditional cable installations using heavy, reinforced cables to the use of blown fibre techniques.

Typically, a blown fibre technique requires that an optical fibre cable containing at least one empty tube is employed, the fibre unit of the optical fibre cable being installed by blowing with compressed air into said empty tube.

The installation of an optical fibre unit by blowing through an empty tube of a preinstalled optical cable is known, for example, from document EP-108,590. According to this document, a fibre unit is installed by using fluid drag of a gaseous medium which passes through the empty tube in the desired direction of advance. This technique, which is known as Blown Fibre or Fibre Blowing, uses distributed viscous drag forces to install a fibre unit which is supported on a cushion of air.

According to the blown fibre technique, since the fibre optical cable is installed first without any optical fibres therein (conveniently by using any traditional cable installation techniques) and since there is no significant stress imposed on the fibre unit during blowing, it is possible to use very lightweight fibre units. Indeed, in terms of space-saving and routing flexibility it is desirable if the fibre unit is both small and flexible.

A fibre unit generally comprises a plurality of optical fibres which are held together by a common coating. Alternatively, a fibre unit comprises a single optical fibre that is surrounded by a coating. Preferably, said coating is made from a low density polymeric material so as to facilitate blowing thereof. Conveniently, the coating is made from a foamed polymeric material.

An optical fibre cable for blown technology generally comprises one or more tubes within which the fibre units are blown, said tubes being assembled together by means of an outer protective sheath.

In a blown fibre installation, at the ingress of a customer's premise, a gas connector is generally interposed between a first optical fibre cable, external to the premise, and a second optical fibre cable, internal to the premise.

The gas connector ensures that gas and water sealing is provided between the fibre unit and the cable tube through which the fibre unit is blown. Therefore, the gas connector prevents gas and water from traveling through the tube of a first optical fibre cable and through the tube of a second optical fibre cable, thereby preventing gas and water from entering the customer's premise. Examples of gas connectors (gas block connectors) known in the art are the products sold by John Guest Group and marketed under the name GB-88-01; GB-85-01 and GB-55-01 on the basis of the tube outer diameter.

Document US-5,610,370 discloses a closure for a cable joint, the closure having a cable inlet with a cable gripper that can provide strain relief to a cable within the inlet. The cable gripper is adjustable to grip cables of different diameters in such a way that the position of the center line of a gripped cable is substantially independent of cable diameter. In detail, the cable gripper comprises at least one bottom section and a top section, the top section being moved towards the bottom section by turning a setting screw so as to center the cable and to allow adjustments to varying diameters.

Document US-5,440,666 discloses an optical fiber cable closure assembly which includes a base member and a mating cover that, when assembled, form a hollow splice closure with openings at each end. Mounted to the base member at at least one end thereof is a grip block assembly which grips the optical cable entering the adjacent open end, and which adjusts to differing sizes of cables. The grip block assembly has an upper member and a lower member and includes first and second pivotally mounted arms on the lower member which are actuated by actuating pins on the upper member and which, as the upper member is tightened down on the lower member, pivot until they bear against and grip the cable. Included within the closure assembly are one or more optical fiber splitters which are used to separate and segregate individual fibers or groups of fibers to be spliced.

Documents US-5,610,370 and US-5,440,666 disclose cable closures which receive thereinto printed circuit boards, branch circuit connections, fibre splice trays, optical fibre splitters, said cable closures being requested to provide for an environmental seal at the cable inlet and outlet ports of said closures. Documents US-5,610,370 and US-5,440,666 do not relate to an installation for a blown optical fibre unit and, in particular, they do not relate to a gas block housing for receiving a gas connector which is not requested to be sealed, such seal being provided by the gas connector.

According to documents US-5,610,370 and US-5,440,666, the cable closures are provided with gripping means that can engage different sizes of cables by tightening setting screws or nut and bolt assemblies. In order to install the cable closures disclosed therein, the technical personnel carrying out the cable installation is requested to suitably gauge the fit to the cables so that a correct gripping force is applied.

Document US-6,314,229 discloses an end seal structure for a cable closure, said seal structure being capable of ensuring insertion of cables different in diameter into a receiving casing for a cable connection without any sealing tape and substantially facilitating both assembling and disassembling thereof. A split cable spacer which is made of a vulcanized rubber composition is arranged so as to be pressedly contacted with outer peripheries of cables. The split cable spacer is integrally provided with a plurality of seal ribs, which are arranged along the cable insertion passages in a manner to be opposite to each other and spaced from each other at predetermined intervals. A split end seal base is provided with a hinge which permits the split end seal base to be pivotally split into two halves. The split cable spacer is fittedly held in the split end seal base, so that halves of the split cable spacer may be detachably joined to each other through abutting joint faces thereof.

Document US-6,314,229 discloses a cable closure which protectively receives a cable connection section at which splicing, branching and wiring of communication cables are carried out. Document US-6,314,229 does not relate to an installation for a blown optical fibre unit and, in particular, does not relate to a gas block housing for receiving a gas connector which is not requested to be sealed, such seal being provided by the gas connector.

According to document US-6,314,229, the cable closure can engage different sizes of cables thanks to the presence of end seal structures that are placed in correspondence of the inlet and outlet ports of the cable closure, said end seal structures being provided with deformable cable spacers that can be deformed depending on the cable diameter to be received into the cable closure.

The Applicant has noticed that the solutions used in the cable closures known in the art cannot be applied to the gas block housings. For example, some cable closures known in the art (as shown, for instance, in documents US-5,610,370 and US-5,440,666), require that the installer manually operates the gripping means for allowing the cable closure to receive cable of different diameters. It is up to the installer to judge the correct clamping force to be applied, thereby possibly leading to under clamped cables or over clamped cables. In the case the clamping force applied to the cables is lower than the requested one (under clamped cables), no retention on the cables can be ensured and thus any movement caused on the cables (e.g., pulling or flexing the cables) can damage the cables, for instance kinking of the optical cable tubes. In the case the clamping force applied to the cables is higher than the requested one (over clamped cables), the optical cable tubes can be squeezed and the optical fibre units contained thereinto can be seriously damaged.

Some cable closures known in the art (as shown, for instance, in document US-6,314,229) are particularly complex, thereby inevitably increasing the manufacturing costs and requiring specialized technical personnel to be employed, thereby inevitably increasing also the installing costs.

The Applicant has faced the problem of providing a gas block housing which is suitable for receiving single tube optical fibre cables of different sizes and which advantageously ensures that a correct clamping force can be applied for each optical fibre cable size suitable for being located within the gas block housing.

In particular, the Applicant has faced the problem of providing a gas block housing which allows a clamping force of a predetermined amount to be applied onto the optical fibre cables without the need for the installer to subjectively evaluate the clamping force amount which is needed for a given optical fibre cable diameter.

The Applicant has perceived that by automatically applying a predetermined clamping force amount - said amount being predetermined with respect to the cable diameter to be clamped - it is possible to avoid that under clamping or over clamping conditions can occur and, therefore, the fibre optical cables can be correctly retained within the gas block housing and no damages to the cables are caused to occur (e.g. kinking of the cable tubes).

US 6,176,022 discloses a system for removing moisture. Coupling members are provided each including a bottom part and a top part. The bottom part and the top part are provided with corresponding recesses for the close-fitting and gastight receiving of the first duct end and with corresponding recesses for the close-fitting and gastight receiving of a cable end, when the top part is fastened to the bottom part in a closed state of the coupling member.

EP 0 187 502 discloses a trunking system is provided with optical fibre cables which are secured by collar portions carried by strips which are secured to a wall surface by means of a screw passing through a passageway. Each strip is formed with longitudinal ribs at both sides which mate with complementary grooves formed on the inner walls of a continuous trunking sleeve.

US 5,471,555 discloses a break-out device particularly adapted for providing enhanced strain relief to the fibre optic ribbon which is broken out into individual optical fibres within the device. The break-out device comprises a housing having an aperture in one end to receive a fibre optic ribbon and an aperture in the opposing end to allow an exit for individual buffered optical fibres.

### Summary of the Invention.

The Applicant has found that different sizes of single tube optical fibre cables can be suitably clamped within a single gas block housing by providing the latter with a clamping element that ensures a multiple closing position so that an appropriate and predetermined clamping force is applied onto the single tube optical fibre cable for a corresponding size thereof.

In detail, the Applicant has found that single tube optical fibre cables of different sizes can be arranged within a gas block housing by providing the covering element and the base element thereof with a multi-stage clip mechanism that clamps on the single tube of the optical fibre cables entering into and exiting from the gas block housing, respectively, so that a predetermined clamping force amount can be automatically applied according to the optical fibre cable size.

Aspects of the invention are set out in the accompanying claims.

Preferably, the at least two closing positions are discrete.

Preferably, the gas block housing is suitable for receiving at least one single tube optical fibre cable, i.e. the optical fibre cable is provided with only one tube through which the fibre unit is blown.

According to a preferred embodiment of the present invention, the gas block housing is provided with an inlet port and an outlet port for receiving, respectively, a first single tube optical fibre cable and a second single tube optical fibre cable. In detail, the first single tube optical fibre cable enters into the gas block housing through the inlet port thereof while the second single tube optical fibre cable exits from the gas block housing through the outlet port thereof.

The inlet port and the outlet port of the gas block housing of the above preferred embodiment define two clamping points, one clamping point for each optical fibre cable entering into and exiting from the gas block housing, respectively. According to a preferred feature of the present invention, the clamping element of the gas block housing allows the base element and the covering element to lock the optical fibre cables in a plurality of discrete positions, thereby providing an appropriate clamping force for a corresponding optical fibre cable diameter. In detail, the covering element is preferably provided with at least one ratchet element for unidirectional engagement with the base element at selectable discrete positions, whereby optical fibre cables of different diameters are able to be secured in the inlet and outlet ports with selectable compression force.

Therefore, the gas block housing of the present invention is particularly advantageous since a single gas block housing can be used to accommodate a plurality of different optical fibre cable diameters.

According to the present invention, preferably the gas block housing is designed to lock first and second optical fibre cables of the same diameter. In other words, preferably the first and second optical fibre cables - respectively entering into and exiting from the gas block housing - have the same outer diameter.

Alternatively, the gas block housing can accept two optical fibre cables of different diameters at the same time, i.e. the first optical fibre cable entering into the gas block housing has an outer diameter different from that of the second optical fibre cable exiting from the gas block housing. This can be obtained, for instance, by providing the gas block housing with two different covering elements that are axially adjacent to each other and that engage a common base element. According to this embodiment, the first covering element (e.g. a saddle member) forms with the base element an inlet port for the first optical fibre cable entering into the gas block housing and the second covering element forms with the base element an outlet port for the second optical fibre cable exiting from the gas block housing. The first and second covering elements are adapted for independent unidirectional engagement with the common base element.

Alternatively, the base element and the covering element are hinged together along one side thereof.

According to a further aspect of the present invention, the clamping element can include a plurality of slots which are provided to the base element and which are suitable for engaging with hooks provided to the covering element. For example the covering element can be designed to slide and lock into one of said slots, each slot corresponding to a discrete locking position.

Alternatively, the clamping element comprises a barb in combination with a series of hoops, positioned in a row such that the barb can pass unidirectionally through the hoops, each hoop corresponding to a discrete locking position.

Preferably, the base element of the gas block housing is suitable for being mounted on a structure of a customer's premise. Preferably, the structure of the customer's premise is an internal or an external wall of the customer's premise. More preferably, the gas block housing of the present invention is mounted inside the customer's premise, e.g. on a building internal wall.

Alternatively, the gas block housing of an embodiment of the present invention is suitable for being installed in an underground conduit.

According to embodiments of the present invention, the gas block housing is generally not requested to provide for a sealing action from the external environment. In fact, the gas connector located within the gas block housing is envisaged usually to connect and seal two single tube optical fibre cables, a fibre unit being blown through the tubes of said optical fibre cables.

According to embodiments of the present invention, the gas block housing is provided with at least two inlet ports - and at least two outlet ports in correspondence of said inlet ports - for receiving at least two tubes of at least one optical fibre cable entering the gas block housing, each of said tubes being suitable for blowing a fibre unit.

### Brief Description of the drawings.

- Fig. 1 is a perspective lateral view of a base element for a gas block housing of an embodiment of the present invention;
- Fig. 2 is a perspective lateral view of a covering element for a gas block housing of an embodiment the present invention;
- Fig. 3 is a perspective view of the gas block housing of an embodiment of the present invention wherein the base element and the covering element are engaged in a first locking position;

- Fig. 4 is a front view of the gas block housing of Fig. 3;
- Fig. 5 is an exploded perspective view of an installation for a blown optical fibre unit according to an embodiment of the present invention;
- Fig. 6 is a partial perspective view of the installation of Fig. 5;
- Fig. 7 and Fig. 8 are perspective views of the installation of Fig. 5 wherein the covering element engages the base element in a first locking position and in a second locking position respectively; and
- Fig. 9 is a perspective view of a gas block housing connection to a wall box.

### Detailed Description of the Preferred Embodiment.

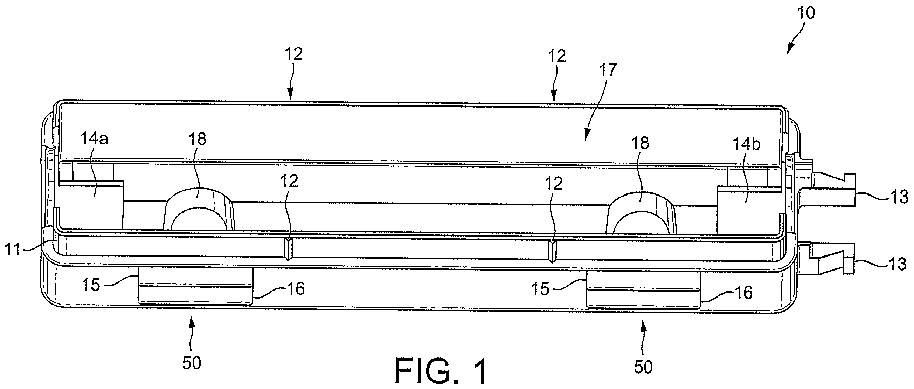

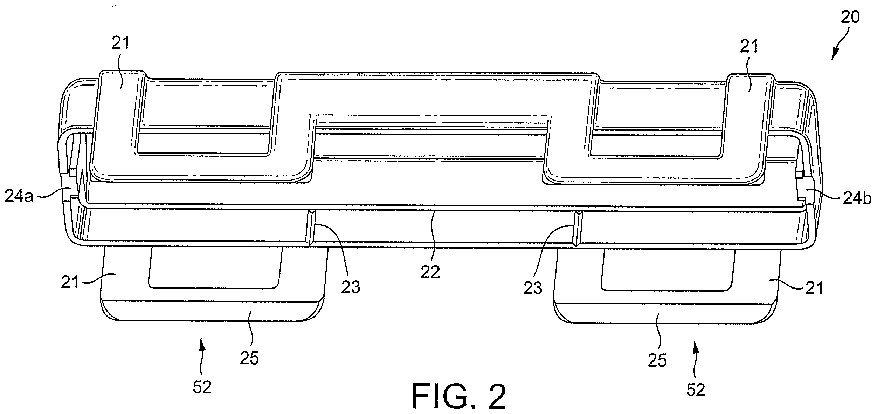

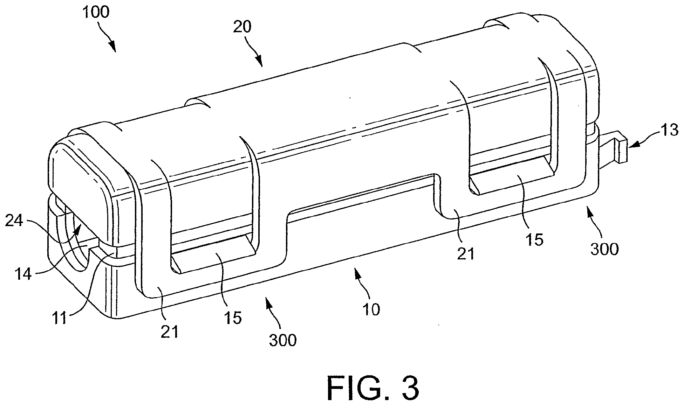

Fig. 1 shows a base element 10 for a gas block housing 100 (see Fig. 3) in accordance with an embodiment of the present invention. The base element 10 comprises an upper portion 11 which allows a covering element 20 (see Fig. 2) to engage with the base element 10 so as to close the gas block housing 100. The upper portion 11 is provided with guides 12 for allowing a correct coupling of the base element 10 to the covering element 20.

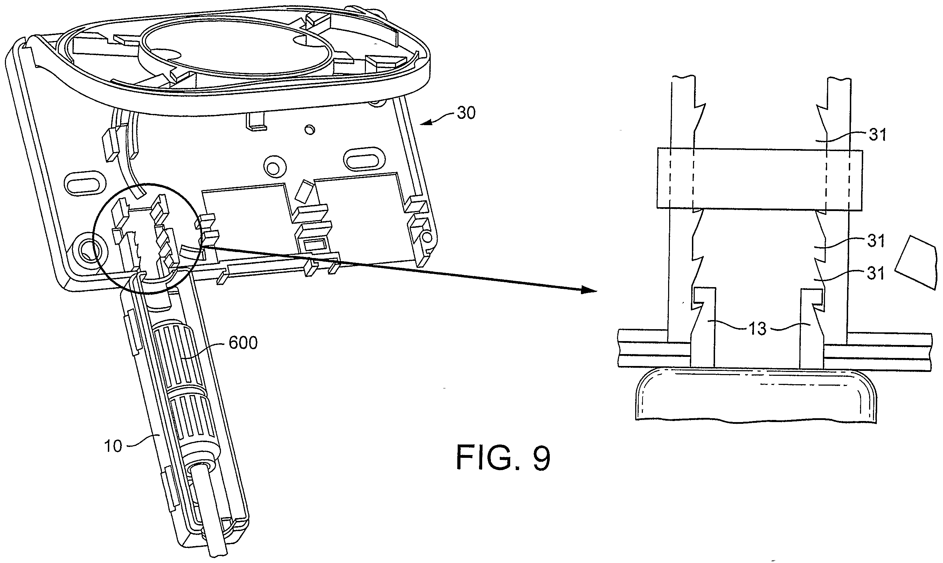

The base element 10 also comprises two lugs 13 for securing the base element 10 to a wall box (see Fig. 9) as described in detail in the following of the present description.

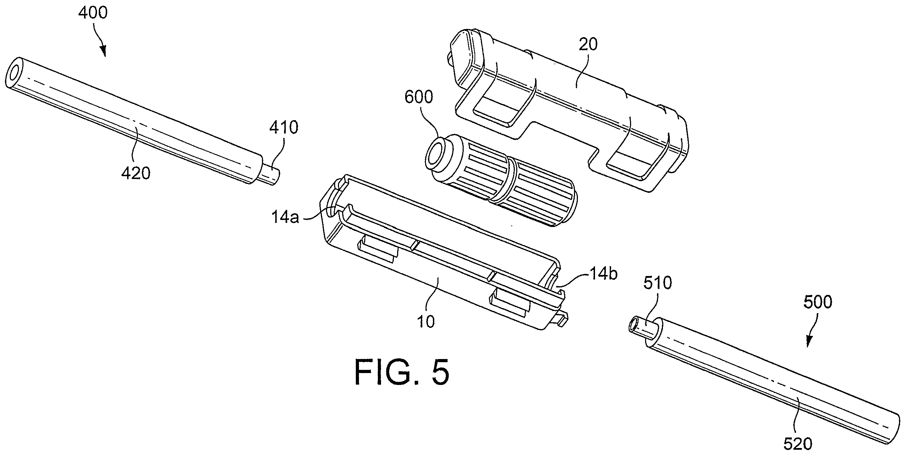

The base element 10 is further provided with cable guides 14 for allowing the gas block housing 100 to receive, respectively, a first single tube optical fibre cable 400 entering the gas block housing 100 (see, for instance, Fig. 5) and a second single tube optical fibre cable 500 exiting from the gas block housing 100 (see, for instance, Fig. 5). In detail, at the axial ends thereof, the base element 10 is provided with a cable guide 14a, 14b (a cable guide at each axial end, respectively) in the form of a recess for accepting the first and second single tube optical fibre cables 400, 500.

According to the present embodiment the gas block housing 100 is provided with a clamping element 300 (see, for instance, Fig. 3) which has multiple closing positions. The clamping element 300 allows the covering element 20 to be coupled with the base element 10. Moreover, the clamping element 300 allows the single tube optical fibre cables 400, 500 to be correctly clamped to the gas block housing 100.

According to the preferred embodiment shown in the figures, the clamping element 300 comprises four clamping teeth 50 which are integral with the base element 10. In detail, the base element 10 is provided with two clamping teeth 50 on each axial edge thereof. In the present description the term "axial end" is used to indicate the base element edge that is substantially parallel to the longitudinal axis of the base element 10. Therefore, the base element axial edges are substantially parallel to the single tube optical fibre cables which are received into the gas block housing.

Alternatively, the clamping element 300 can comprise at least one clamping tooth 50 which is integral with the covering element 20.

According to the preferred embodiment shown in the figures, each clamping tooth 50 has a saw-toothed shape so that an upper tooth 15 and a lower tooth 16 are provided. The upper tooth 15 and lower tooth 16 allow that a double closing position of the covering element 20 onto the base element 10 is provided, as indicated in more detail in the following of the present description. Therefore, each axial edge of the base element 10 comprises two upper teeth 15 and two lower teeth 16.

The base element 10 defines a cavity 17 for holding a gas connector 600 (see, for instance, Fig. 5) which is interposed between the first single tube optical fibre cable 400 and the second single tube optical fibre cable 500.

The base element 10 is further provided with holes 18 for receiving fixing means (e.g. screws) so as to attach the base element 10 to a supporting structure where the gas block housing 100 is requested to be installed, e.g. a premise's wall or an under-floor box.

Fig. 2 shows the covering element 20 (e.g. a lid) for the gas block housing 100 of the present embodiment. The covering element 20 is suitable for engaging the base element 10 so as to form the closed cavity 17 wherein the gas connector 600 is housed. In detail, the covering element 20 comprises a lower portion 22 which engages with the upper portion 11 of the base element 10 so as to define the cavity 17 mentioned above.

The lower portion 22 of the covering element 20 comprises grooves 23 which mate with the guides 12 that are provided on the base element 10. In detail, the grooves 23 are suitably shaped for receiving the guides 12 so that a correct engagement of the covering element 20 onto the base element 10 is ensured.

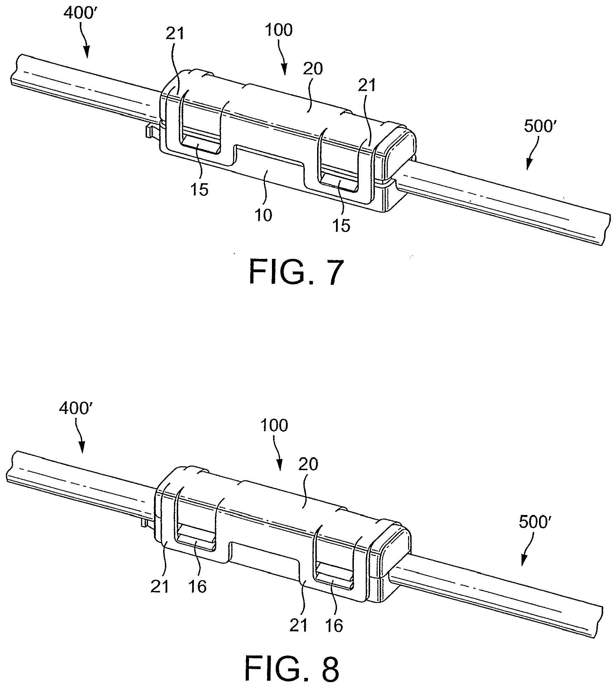

The clamping mechanism 300 of the gas block housing 100 further comprises at least one receiving element 52 which is suitable for engaging with the at least one clamping tooth 50 of the base element 10. In detail, according to the specific embodiment shown in Fig. 2, the clamping mechanism 300 comprises four receiving elements 52. The receiving elements 52 comprise eye-members 21 which are integral with the covering element 20 and which engage with the clamping teeth 50 of the base element 10. According to the present embodiment, the eye-members 21 can engage the upper tooth 15 or the lower tooth 16 of the clamping tooth 50 so that two single tube optical fibre cables of different sizes can be suitably received into the gas block housing 100. Fig. 7 shows the gas block housing 100 clamping the single tube optical fibre cables 400, 500 in the case the eye-members 21 of the covering element 20 are associated to the upper teeth 15 of the base element 10. Fig. 8 shows the gas block housing 100 clamping the single tube optical fibre cables 400', 500' in the case the eye-members 21 of the covering element 20 are associated to the lower teeth 16 of the base element 10, the single tube optical fibre cables 400', 500' having an outer diameter lower than the outer diameter of the single tube optical fibre cables 400, 500.

According to the embodiment shown in Fig. 2, the covering element 20 is provided with four eye-members 21. In detail, two eye-members 21 are positioned towards the front so as to secure the single tube optical fibre cable (for instance, cables 400 and 400' in the figures) entering the front of the gas block housing 100, and two eye-members 21 are positioned towards the rear so as to secure the single tube optical fibre cable (for instance, cables 500 and 500' in the figures) entering the rear of the gas block housing 100 (i.e. exiting from the gas block housing 100).

Alternatively, the clamping element 300 comprises at least one receiving element 52 which is integral with the base element 10.

The covering element 20 is provided with cable guides 24 for allowing the gas block housing 100 to receive the first single tube optical fibre cable 400 entering the gas block housing 100 and the second single tube optical fibre cable 500 exiting from the gas block housing 100. In detail, at the axial ends thereof, the covering element 20 is provided with cable guides 24a, 24b (a cable guide at each axial end, respectively) in the form of recesses for accepting the first and second single tube optical fibre cables 400, 500. The cable guides 24a, 24b of the covering element 20 are positioned in correspondence of the cable guides 14a, 14b of the base element 10 so as to provide the gas block housing 100 with an inlet port and an outlet port for entering the single tube optical fibre cable into the gas block housing and for exiting the single tube optical fibre cable from the gas block housing, respectively.

Preferably, each eye-member 21 of the covering element 20 comprises a bevel 25 which in use enables the engaging portion of the eye-member 21 to pass more easily over the clamping tooth 50.

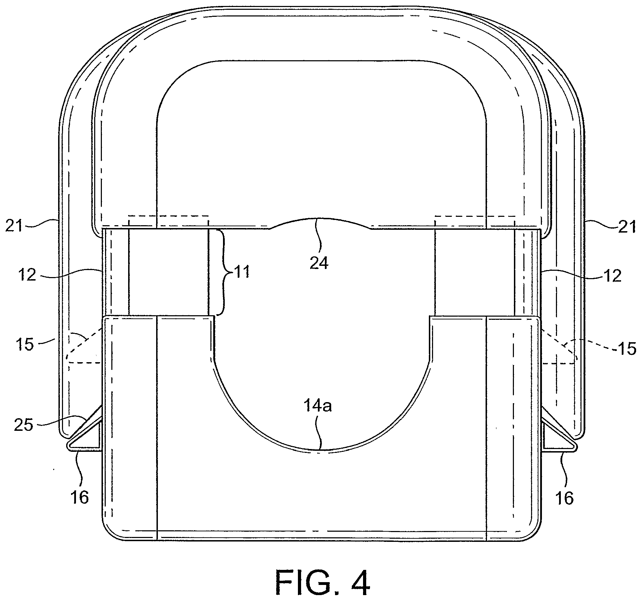

Fig. 3 and Fig. 4 show the gas block housing 100 of the present embodiment when the covering element 20 is coupled to the base element 10.

In use, for installing a blown optical fibre unit, one end of a first single tube optical fibre cable 400 is placed on a front cable guide 14a of the base element 10 and one end of a second single tube optical fibre cable 500 is placed on the rear cable guide 14b of the base element 10 (see Fig. 5).

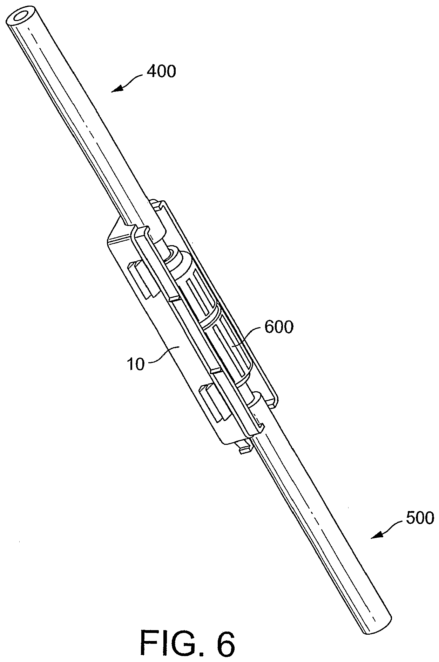

As better shown in Fig. 5 and Fig. 6, a single tube optical fibre cable 400, 500 comprises a tube 410, 510 which is suitable for blowing a fibre unit thereinto. Preferably, the tube 410, 420 is coated with an outer protective sheath 420, 520.

Preferably, the outer diameter of the optical fibre cable (i.e. the outer diameter of tubes 410, 420 already provided with the outer protective sheaths 420, 520) is comprised from about 6 mm to about 10 mm.

A gas connector 600 is positioned within the cavity 17 of the base element 10 and the tubes 410, 510 of the first and second single tube optical fibre cables 400, 500 are coupled to the front and rear axial ends of the gas connector, respectively (see Fig. 5). During installation, the gas connector 600 is fastened to the tube of the first optical fibre cable and to the tube of the second optical fibre cable so that gas and water sealing is obtained between the single tubes of the two optical fibre cables and the fibre unit which is blown into said single tubes.

Successively, the covering element 20 is placed over the base element 10 and the upper portion 11 of the base element 10 engages with the lower portion 22 of the covering element 20 (see Fig. 5). As mentioned above, the guides 12 provided on the base element 10 contribute in correctly positioning the covering element 20 onto the base element 10.

With reference to Fig. 7 and Fig. 8, when a force is applied between the cable guide 24 of the covering element 20 and the cable guide 14 of the base element 10 in order to properly clamp the single tube optical fibre cables 400, 500, the eye-members 21 of the covering element 20 pass over the clamping teeth 50. As the clamping teeth 50 are saw-shaped, they conveniently stop the eye-members 21 from retreating. Thus, the correct clamping force is maintained on the optical fibre cables and the eye-members 21 are locked in position at the upper teeth 15 (Fig. 7) or at the lower teeth 16 (Fig. 8) depending on the optical fibre cables sizes (i.e. on the outer diameter of the outer protective sheath 420, 520).

Referring to Fig. 9, the base element 10 of the gas block housing 100 of the present embodiment is shown engaged to a wall box 30 which is used for conveying the fibre unit into a customer's premise. The lugs 13 of the base element 10 lock to teeth 31 which are located on the wall box 30, thus providing a secure snap fit means to attach the base element 10 to the wall box 30.

According to this specific embodiment (shown in Fig. 9), only one single tube optical fibre cable is connected to the gas connector 600 which is located within the base element 10 of the gas block housing 100. In this case, it is not necessary that a further single tube optical fibre cable exits from the gas block housing 100. In fact, according to this specific embodiment, the fibre unit is blown through the first single tube optical fibre cable and through the gas connector; successively, the fibre unit - exiting from the gas connector - directly enters the wall box 30 for being routed or otherwise operated (e.g. spliced, connectorized, ...) within the customer's premise.

## Claims

1. A device comprising a gas block housing (100) for a blown optical fibre unit installation, and a gas connector (600) for coupling or fastening tubes (410, 420) of optical fibre cables (400, 500), whereby the gas connector (600) is provided within said gas block housing, said housing comprising:
• a base element (10);
• a covering element (20), said covering element mating with the base element to form an inner cavity (17) and an inlet port and an outlet port for receiving a first optical fibre cable (400; 400') and a second optical fibre cable (500; 500') respectively; and
• at least one clamping element (300) for locking the covering element to the base element,
**characterized by** said clamping element comprising:
a plurality of clamping teeth (50) and at least one receiving element (52), said receiving element engaging with one of the plurality of clamping teeth, or
a plurality of slots which are provided to the base element (10) and which are suitable for engaging with hooks provided to the covering element (20);
said clamping element (300) having at least two closing positions for locking at least two different diameters of said optical fibre cable with a predetermined clamping force.

2. The device of claim 1, wherein the plurality of clamping teeth (50) are integral with the base element (10).

3. The device of claim 1 or claim 2, wherein the plurality of clamping teeth (50) have a saw-toothed shape.

4. The device of any of claims 1 to 3, wherein the plurality of clamping teeth (50) include an upper tooth (15) and a lower tooth (16) which allow that a double closing position of the covering element (20) onto the base element (10) is provided.

5. The device of any previous claim, wherein the base element (10) is provided with an upper portion (11) and the covering element (20) is provided with a lower portion (22) for allowing coupling of the base element (10) to the covering element (20).

6. The device of claim 5, wherein the upper portion (11) is provided with guides (12) and the lower portion (22) is provided with grooves (23), said guides engaging with said grooves for coupling of the base element (10) to the covering element (20).

7. The device of any previous claim, having two different covering elements that are axially adjacent to each other and engage the common base element (10).

8. An installation for a blown optical fibre unit, said installation comprising:
the device of any preceding claim, and a first optical fibre cable (400; 400') and a second optical fibre cable (500; 500') received in said inlet port and outlet port respectively, wherein said first optical fibre cable (400, 400') comprises at least one tube (410, 420) for blowing an optical fibre unit, and the second optical fibre cable (500; 500') comprises a tube (510, 520) for hauling said blown optical fibre unit.

9. The installation according to claim 8, wherein the gas connector (600) is interposed between the first optical fibre cable (400; 400') and the second optical fibre cable (500; 500') for joining said cables communicatively together.

10. A method of installing an optical fibre unit, said method comprising the steps of:
- blowing said optical fibre unit through a tube (410, 420) of at least one optical fibre cable (400; 400') entering into the gas block housing (100) of a device according to any of claims 1 to 7;
- locking a covering element (20) of the gas block housing onto a base element (10) of the gas block housing, and
- clamping said optical fibre cable within said gas block housing, wherein the locking step and the clamping step are performed in one action.

11. The method of claim 10, further comprising the step of blowing the optical fibre unit through a first optical fibre cable (400; 400') and through a second optical fibre cable (500; 500'), said first optical fibre cable entering into the gas block housing (100) and said second optical fibre cable exiting from the gas block housing.

12. The method of claim 11, further comprising the step of blowing the optical fibre unit through a gas connector (600) which is located within the base element (10) and which is interposed between the tube (410, 420) of the first optical fibre cable (400; 400') and a tube (510, 520) of the second optical fibre cable (500; 500').

## Patentansprüche

1. Vorrichtung, die ein Gasblocker-Gehäuse (100) für eine Einblas-Installation einer Lichtleitfaser-Einheit sowie einen Gasverbinder (600) zum Koppeln oder Befestigen von Röhren (410, 420) von Lichtleitfaser-Kabeln (400, 500) umfasst, wobei sich der Gasverbinder (600) im Inneren des Gasblocker-Gehäuses befindet und das Gehäuse umfasst:
- ein Basiselement (10);
- ein Abdeckelement (20), wobei das Abdeckelement mit dem Basiselement in Eingriff ist und einen Innenhohlraum (17) sowie eine Einlassöffnung und eine Auslassöffnung zum Aufnehmen eines ersten Lichtleitfaser-Kabels (400; 400') bzw. eines zweiten Lichtleitfaser-Kabels (500; 500') bildet; und
- wenigstens ein Klemmelement (300) zum Arretieren des Abdeckelementes an dem Basiselement,
**dadurch gekennzeichnet, dass** das Klemmelement umfasst:
eine Vielzahl von Klemm-Zähnen (50) sowie wenigstens ein Aufnahmeelement (52), wobei das Aufnahmeelement mit einem der Vielzahl von Klemm-Zähnen in Eingriff kommt, oder
eine Vielzahl von Schlitzen, die sich an dem Basiselement (10) befinden und dazu geeignet sind, mit Haken in Eingriff zu kommen, die sich an dem Abdeckelement (20) befinden;
wobei das Klemmelement (300) wenigstens zwei Schließ-Positionen zum Arretieren wenigstens zweier unterschiedlicher Durchmesser des Lichtleitfaser-Kabels mit einer vorgegebenen Klemmkraft hat.

2. Vorrichtung nach Anspruch 1, wobei die Vielzahl von Klemm-Zähnen (50) integral mit dem Basiselement (10) ausgebildet sind.

3. Vorrichtung nach Anspruch 1 oder Anspruch 2, wobei die Vielzahl von Klemm-Zähnen (50) eine Sägezahn-Form haben.

4. Vorrichtung nach einem der Ansprüche 1 bis 3, wobei die Vielzahl von Klemm-Zähnen (50) einen oberen Zahn (15) sowie einen unteren Zahn (16) enthalten, die zulassen, dass es eine doppelte Schließ-Position des Abdeckelementes (20) an dem Basiselement (10) gibt.

5. Vorrichtung nach einem der vorangehenden Ansprüche, wobei das Basiselement (10) mit einem oberen Abschnitt (11) versehen ist und das Abdeckelement (20) mit einem unteren Abschnitt (22) versehen ist, die Koppeln des Basiselementes (10) mit dem Abdeck-element (20) zulassen.

6. Vorrichtung nach Anspruch 5, wobei der obere Abschnitt (11) mit Führungen (12) versehen ist und der untere Abschnitt (22) mit Nuten (23) versehen ist und die Führungen mit den Nuten in Eingriff kommen, um das Basiselement (10) mit dem Abdeckelement (20) zu koppeln.

7. Vorrichtung nach einem der vorangehenden Ansprüche, die zwei verschiedene Abdeckelemente aufweist, die axial aneinandergrenzen und mit dem gemeinsamen Basiselement (10) in Eingriff kommen.

8. Installation für eine eingeblasene Lichtleitfaser-Einheit, wobei die Installation umfasst:
die Vorrichtung nach einem der vorangehenden Ansprüche, sowie ein erstes Lichtleitfaser-Kabel (400; 400') und ein zweites Lichtleitfaser-Kabel (500; 500'), die in der Einlassöffnung bzw. der Auslassöffnung aufgenommen sind, wobei das erste Lichtleitfaser-Kabel (400, 400') wenigstens eine Röhre (410, 420) zum Einblasen einer Lichtleitfaser-Einheit umfasst und das zweite Lichtleitfaser-Kabel (500; 500') eine Röhre (510, 520) zum Ziehen der eingeblasenen Lichtleitfaser-Einheit umfasst.

9. Installation nach Anspruch 8, wobei der Gasverbinder (600) zwischen dem ersten Lichtleitfaser-Kabel (400; 400') und dem zweiten Lichtleitfaser-Kabel (500; 500') angeordnet ist, um die Kabel kommunizierend miteinander zu verbinden.

10. Verfahren zum Installieren einer Lichtleitfaser-Einheit, wobei das Verfahren die folgenden Schritte umfasst:
- Einblasen der Lichtleitfaser-Einheit über eine Röhre (410, 420) wenigstens eines Lichtleitfaser-Kabels (400; 400'), das in das Gasblocker-Gehäuse (100) einer Vorrichtung nach einem der Ansprüche 1 bis 7 eintritt;
- Arretieren eines Abdeckelementes (20) des Gasblocker-Gehäuses an einem Basiselement (10) des Gasblocker-Gehäuses, und
- Festklemmen der Lichtleitfaser-Einheit im Inneren des Gasblocker-Gehäuses, wobei der Schritt des Arretierens und der Schritt des Festklemmens in einem Vorgang durchgeführt werden.

11. Verfahren nach Anspruch 10, das des Weiteren den Schritt des Einblasens der Lichtleitfaser-Einheit über ein erstes Lichtleitfaser-Kabel (400; 400') sowie über ein zweites Lichtleitfaser-Kabel (500; 500') umfasst, wobei das erste Lichtleitfaser-Kabel in das Gasblocker-Gehäuse (100) eintritt und das zweite Lichtleitfaser-Kabel aus dem Gasblocker-Gehäuse austritt.

12. Verfahren nach Anspruch 11, das des Weiteren den Schritt des Einblasens der Lichtleitfaser-Einheit über einen Gasverbinder (600) umfasst, der sich im Inneren des Basiselementes (10) befindet und der zwischen der Röhre (410, 420) des ersten Lichtleitfaser-Kabels (400; 400') und einer Röhre (510, 520) des zweiten Lichtleitfaser-Kabels (500; 500') angeordnet ist.

## Revendications

1. Dispositif comprenant un boîtier de bloc de gaz (100) pour une installation d'unité de fibre optique soufflée, et un raccord à gaz (600) pour coupler ou arrimer des tubes (410, 420) de câbles de fibre optique (400, 500), dans lequel le raccord à gaz (600) est prévu à l'intérieur dudit boîtier de bloc de gaz, ledit boîtier comprenant :
• un élément de base (10) ;
• un élément de recouvrement (20), ledit élément de recouvrement s'appariant avec l'élément de base pour former une cavité interne (17) et un orifice d'entrée et un orifice de sortie pour recevoir un premier câble de fibre optique (400 ; 400') et un second câble de fibre optique (500 ; 500') respectivement ; et
• au moins un élément de serrage (300) pour verrouiller l'élément de recouvrement sur l'élément de base,
**caractérisé en ce que** ledit élément de serrage comprend :
une pluralité de dents de serrage (50) et au moins un élément de réception (52), ledit élément de réception venant en prise avec l'une de la pluralité de dents de serrage, ou
une pluralité de fentes qui sont prévues sur l'élément de base (10) et qui sont appropriées pour venir en prise avec des crochets prévus sur l'élément de recouvrement (20) ;
ledit élément de serrage (300) ayant au moins deux positions de fermeture pour verrouiller au moins deux diamètres différents dudit câble de fibre optique avec une force de serrage prédéterminée.

2. Dispositif selon la revendication 1, dans lequel la pluralité de dents de serrage (50) sont formées d'un seul tenant avec l'élément de base (10).

3. Dispositif selon la revendication 1 ou la revendication 2, dans lequel la pluralité de dents de serrage (50) ont une forme en dents de scie.

4. Dispositif selon l'une quelconque des revendications 1 à 3, dans lequel la pluralité de dents de serrage (50) incluent une dent supérieure (15) et une dent inférieure (16) qui permettent qu'une position de fermeture double de l'élément de recouvrement (20) sur l'élément de base (10) soit prévue.

5. Dispositif selon l'une quelconque des revendications précédentes, dans lequel l'élément de base (10) est pourvu d'une portion supérieure (11) et l'élément de recouvrement (20) est pourvu d'une portion inférieure (22) pour permettre le couplage de l'élément de base (10) à l'élément de recouvrement (20).

6. Dispositif selon la revendication 5, dans lequel la portion supérieure (11) est pourvue de guides (12) et la portion inférieure (22) est pourvue de rainures (23), lesdits guides venant en prise avec lesdites rainures pour le couplage de l'élément de base (10) à l'élément de recouvrement (20).

7. Dispositif selon l'une quelconque des revendications précédentes, ayant deux éléments de recouvrement différents qui sont axialement adjacents l'un à l'autre et qui viennent en prise avec l'élément de base (10) commun.

8. Installation pour une unité de fibre optique soufflée, ladite installation comprenant :
le dispositif de l'une quelconque des revendications précédentes, et un premier câble de fibre optique (400 ; 400') et un second câble de fibre optique (500 ; 500') reçus dans ledit orifice d'entrée et ledit orifice de sortie respectivement, dans laquelle ledit premier câble de fibre optique (400 ; 400') comprend au moins un tube (410, 420) pour le soufflage d'une unité de fibre optique, et le second câble de fibre optique (500 ; 500') comprend un tube (510, 520) pour le tirage de ladite unité de fibre optique soufflée.

9. Installation selon la revendication 8, dans laquelle le raccord à gaz (600) est interposé entre le premier câble de fibre optique (400 ; 400') et le second câble de fibre optique (500 ; 500') pour joindre ensemble lesdits câbles en communication.

10. Procédé d'installation d'une unité de fibre optique, ledit procédé comprenant les étapes de :
- soufflage de ladite unité de fibre optique à travers un tube (410, 420) d'au moins un câble de fibre optique (400 ; 400') entrant dans le boîtier de bloc de gaz (100) d'un dispositif selon l'une quelconque des revendications 1 à 7 ;
- verrouillage d'un élément de recouvrement (20) du boîtier de bloc de gaz sur un élément de base (10) du boîtier de bloc de gaz, et
- serrage dudit câble de fibre optique à l'intérieur dudit logement de bloc de gaz, dans lequel l'étape de verrouillage et l'étape de serrage sont réalisées en une action.

11. Procédé selon la revendication 10, comprenant en outre l'étape de soufflage de l'unité de fibre optique à travers un premier câble de fibre optique (400 ; 400') et à travers un second câble de fibre optique (500 ; 500'), ledit premier câble de fibre optique entrant dans le boîtier de bloc de gaz (100) et ledit second câble de fibre optique sortant du boîtier de bloc de gaz.

12. Procédé selon la revendication 11, comprenant en outre l'étape de soufflage de l'unité de fibre optique à travers un raccord à gaz (600) qui est situé à l'intérieur de l'élément de base (10) et qui est interposé entre le tube (410, 420) du premier câble de fibre optique (400 ; 400') et un tube (510, 520) du second câble de fibre optique (500 ; 500').
